# EUROPÄISCHE PATENTSCHRIFT

(11) **EP 1 377 929 B1**
(45) Veröffentlichungstag und Bekanntmachung des Hinweises auf die Patenterteilung: **10.01.2007**
(21) Anmeldenummer: 02729825.6
(22) Anmeldetag: 06.03.2002
(51) Int. Cl.: G06F 3/033

(54) **GROSSER BERÜHRUNGSEMPFINDLICHER BEREICH MIT ZEIT- UND ORTSGESTEUERTEN OPTISCHEN SENDER- UND EMPFÄNGERMODULEN**
LARGE TOUCH-SENSITIVE AREA WITH TIME-CONTROLLED AND LOCATION-CONTROLLED EMITTER AND RECEIVER MODULES
GRANDE ZONE SENSIBLE AU TOUCHER COMPORTANT DES MODULES D'EMISSION ET DE RECEPTION A COMMANDE TEMPORELLE ET LOCALE

(30) Priorität: 07.03.2001 DE 10110744
(43) Veröffentlichungstag der Anmeldung: 07.01.2004
(73) Patentinhaber: Godler, Franc, 01968 Senftenberg (DE)
(72) Erfinder: Godler, Franc, 01968 Senftenberg (DE)
(74) Vertreter: Kietzmann, Manfred
(86) Internationale Anmeldenummer: PCT/DE2002/001131
(87) Internationale Veröffentlichungsnummer: WO 2002/077915

(56) Entgegenhaltungen:
- EP-A- 0 330 767
- EP-A- 0 772 148
- WO-A-86/00447
- FR-A- 2 567 342
- US-A- 3 764 813
- US-A- 4 247 767
- US-A- 4 905 174
- US-A- 5 148 015
- US-A- 5 785 439

## Beschreibung

Die Erfindung betrifft den optischen und elektronischen Aufbau eines sehr großen (möglich ab 0,04m², typisch: >1m²) berührungsempfindlichen Bereiches (auch Touchscreen genannt) auf einer beliebigen transparenten Fläche (Bildschirm), welcher dazu dient multiaktive Schaufenster, Multiaktivboxen, Infoterminals oder Sicherheitssysteme z. B. in Form von Personenschleusen aufzubauen. Zum ersten Mal wird hier die Anwendung eines multiaktiven Schaufensters beschrieben, dessen gesamte Größe bis zu 8m x 8m interaktiv gestaltet werden kann. Dabei beträgt die Auflösung der Abtastung ±1,5mm.

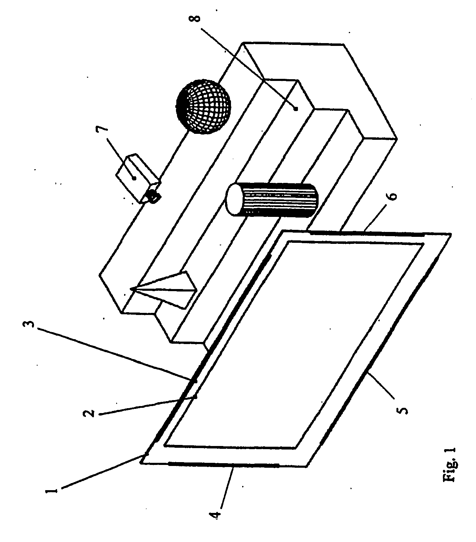

Für die Anwendung als Multiaktiv-Schaufenster (Fig.1) wird hinter der Schaufensterscheibe (1) eine Mattscheibe, Projektionsfolie oder eine andere Projektionsfläche (2) aufgehängt, die ein Teil oder die gesamte Dekoration (8) ersetzt. Darauf wird von hinten mittels eines bekannten lichtleistungsstarken Video- und Datenprojektors (7) ein großflächiges Bild projiziert (Rückprojektion). Diese Bilder werden typischerweise von einem Steuercomputer erzeugt. An der Einfassung der Schaufensterscheibe wird von außen ein vandalismusgeschützter Aufsatz angebracht. Dieser enthält spezielle Infrarot (IR) Sende- und Empfangsmodulreihen (3,4,5,6), welche das Schaufenster (den berührungsempfindlichen Bereich) mit einem unsichtbaren Lichtschrankenvorhang überziehen. Von vorne kann der Benutzer auf einen bestimmten Bereich des Bildes zeigen (Benutzereingriff). Dieser Bereich wird durch den in dieser Patentschrift beschriebenen erfindungsgemäßen Aufbau erkannt, und an den Steuercomputer weitergegeben. Dieser kann entsprechend des Nutzereingriffs den weiteren Ablauf der Bilder und Grafiken steuern. Somit ist eine interaktive, das heißt vom Benutzer gesteuerte Präsentation möglich. Dabei muß dieser Nutzereingriff nicht unbedingt auf der durch die Rückprojektion vorgegebenen Fläche liegen, sondern kann auch ein gesondert gekennzeichneter Bereich (z.B. eine Tatstatur oder Trackball) auf der berührungsempfindlichen Fläche sein. Weiterhin kann der beschriebene Detektionsaufbau auch an anderen optischen Systemen und an Bildgeneratoren angebracht werden, welche auf Flächen Bilder erzeugen (Plasmaschirme, große Monitore, LCD-Bildschirme, Rückprojektionsboxen usw.).

Die im Steuercomputer verarbeitete Präsentation kann z.B. aus einer Internet-Präsentation bestehen. Das Multiaktiv-Schaufenster ist dann in seiner Funktion mit einer Computer-Maus und deren Navigationseigenschaften zu vergleichen. An stark von Fußgängern frequentierten Orten im Stadtraum kann somit erstmals kostengünstig (ohne Personal und rund um die Uhr) Information und Werbung für beliebige Anbieter gestaltet werden.

Beim gegenwärtigen Stand der Technik werden berührungsempfindliche Flächen bis ca. 1 Meter (40 Zoll) bevorzugt in der Art realisiert, dass eine Folie oder eine Anzahl von dünnen leitfähigen Fäden auf der Bildfläche den Benutzereingriff (Berührung) detektiert, indem sich eine elektrische Eigenschaft der Folie oder der Fäden (z.B. Widerstand, Kapazität, Feldstärke) bei Berührung verändert, und diese Veränderung durch eine Auswertung der getrennt erfassten horizontalen und vertikalen elektrischen Signale in die genaue zweidimensionale Position des Benutzereingriffes umgerechnet wird.

Die Nachteile dieser Methoden sind folgende:
1) Der Preis des Aufbaus skaliert stark mit der Größe des berührungsempfindlichen Bereiches. Flächen über ca. 0,5m² können daher nicht preisgünstig realisiert werden.
2) Die Genauigkeit der Berührdetektion nimmt mit größer werdender Fläche ab.
3) Für die Anwendung in öffentlichen Bereichen sind die beschriebenen Methoden deswegen ungeeignet, weil sie nicht vandalismussicher sind. Das heißt, durch mutwilligen zerstörerischen Fremdeinfluß lassen sie sich leicht zerstören und genügen nicht mehr der ihnen zugedachten Funktion.
4) Die meisten Lösungen des Standes der Technik bedingen zusätzliche Schichten über dem projizierten Bild und dämpfen so die Helligkeit des Bildes.

Weitere Möglichkeiten sind die akustische (Ultraschall) Detektion der Unterbrechung, wobei weniger Sender/Empfänger als beim 2-dimensionalem Netzwerk benötigt werden. Diese Technologie eignet sich aber nur zuverlässig bis zu Touchscreen-Größen von ca. 1,5 x 1,5m² und zeigt Nachteile bei der zuverlässigen Detektion eines Benutzereingriffs in den Randbereichen.

Auch gibt es aktive Detektionssysteme. Aktiv bedeutet dabei, dass der Benutzer ein spezielles aktiv sendendes Zeigegerät benutzt, um den Benutzereingriff vorzunehmen (Flip-Chart). Dieses System eignet sich nicht, wenn anonyme Personen die Interaktivität z.B. des multiaktiven Schaufensters nutzen sollen.

Darüber hinaus werden für kleine Touchscreens (z.B. in Bankautomaten) Detektoren auf Basis von Infrarot-Sendern und Empfängern eingesetzt. Dabei wird die berührungsempfindliche Fläche mit unsichtbaren IR-Strahlen überzogen und die Unterbrechung einer Lichtschranke detektiert. Die Sender und Empfänger sind permanent eingeschaltet. Meist werden bei solchen Aufbauten zusätzliche Linsen zur Erhöhung der Lichtstrahlfokussierung verwendet. Damit sind nur kleine Flächen (<0,1 m²) detektierbar, da bei größeren Abständen von den Sende- zu den Empfangseinheiten ein starkes Übersprechen die Detektion des Benutzereingriffes verhindert und außerdem die Lichtintensität der Dioden nicht mehr ausreicht, um eine zuverlässige Detektion zu erreichen.

Es ist aus FR 2 567 342 bekannt, z.B. für Infrarot-Leuchtdioden (IR-LED) aus Fernbedienungen, dass sich LEDs gepulst betreiben lassen, bis hin zu Tastverhältnissen von 1:100. Dies bedeutet, dass die LED das hundertfache der Zeit, welche sie angeschaltet ist (und somit Licht emittiert) ausgeschaltet ist. Dabei werden Impulsfolgen (Bursts) mit Rechtecksignalen an die Sender geleitet, die aufgrund ihrer Eigenkapazität und der pn-Übertragungseigenschaften einen mehr oder weniger sinusförmigen Lichtstrom zur Folge haben. Der elektrische Strom während der kurzen Anschaltdauer kann dann das 100-fache des nominellen Dauerstromes betragen, ohne die Lebensdauer der LED wesentlich zu beeinflussen. Damit können erheblich höhere Spitzenleistungen der Lichtabstrahlung in einem kurzen Zeitraum erreicht werden als dies bei Dauerbetrieb möglich wäre.

Es ist weiterhin bekannt, dass IR-LEDs und IR-Empfänger (IR-empfindliche Photodioden, Phototransistoren oder Photowiderstände) in Lichtschranken Verwendung finden. Dabei wird die Unterbrechung der optischen Verbindung zwischen Sender und Empfänger (wenn sich Sender und Empfänger 'ansehen') bzw. die Herstellung der optischen Verbindung (wenn sich Sender und Empfänger nur sehen, falls ein dritter Gegenstand das ausgesendete Licht reflektiert) ausgewertet und z.B. festgestellt, ob eine Person durch einen bestimmten Raumbereich hindurchtritt bzw. ob sich eine Person vor einer bestimmten Stelle im Raum befindet.

US 4,905,174 beschreibt einen berührungsempfindlichen Bildschirm mit einem Lichtschranken-Gitter. Dabei wird überprüft, ob die ermittelten Koordinaten des Berührpunkts auf dem Bildschirm dieselben sind wie bei der letzten Unterbrechung einer Lichtschranke. In diesem Fall wird das Signal verworfen. Wenn nun beispielsweise ein Insekt eine Lichtschranke dauerhaft blockiert, wird das Signal des entsprechenden Detektors nicht mehr verwendet. Dadurch lassen sich Störungen vermeiden.

US 3,764,813 beschreibt einen optischen Touch-Screen mit Infrarot-Lichtschranken. Dieses Dokument offenbart den Pulsbetrieb (zur Verbesserung des Signal-/Rauschverhältnisses) und die Idee, ein Lauflicht abzufragen. Eine LED beleuchtet (geometrisch bedingt) bis zu drei Detektoren. Die Transistoren der Empfänger werden jeweils mit denen der übernächsten Empfänger zusammengeschaltet. Die Ansprüche sind gegen dieses Dokument abgegrenzt.

Auch US 5,735,433 offenbart eine ähnliche Vorrichtung. Hier wird eine virtuelle Tastatur simuliert. Dabei erfolgt die Detektion eines Benutzereingriffes durch fortlaufend wiederholtes zeit- und ortssequentielles An- und Ausschalten einzelner Infrarot-Sender und Empfangsdioden/Fototransistoren. Die Sender und Empfänger sind paarweise angeordnet, und die Sender und Empfänger werden durch fortlaufend wiederholtes zeit- und ortssequentielles An- und Ausschalten betätigt bzw. abgefragt. Diese Vorrichtung emuliert eine Standard-Tastatur-Schnittstelle oder eine Maus.

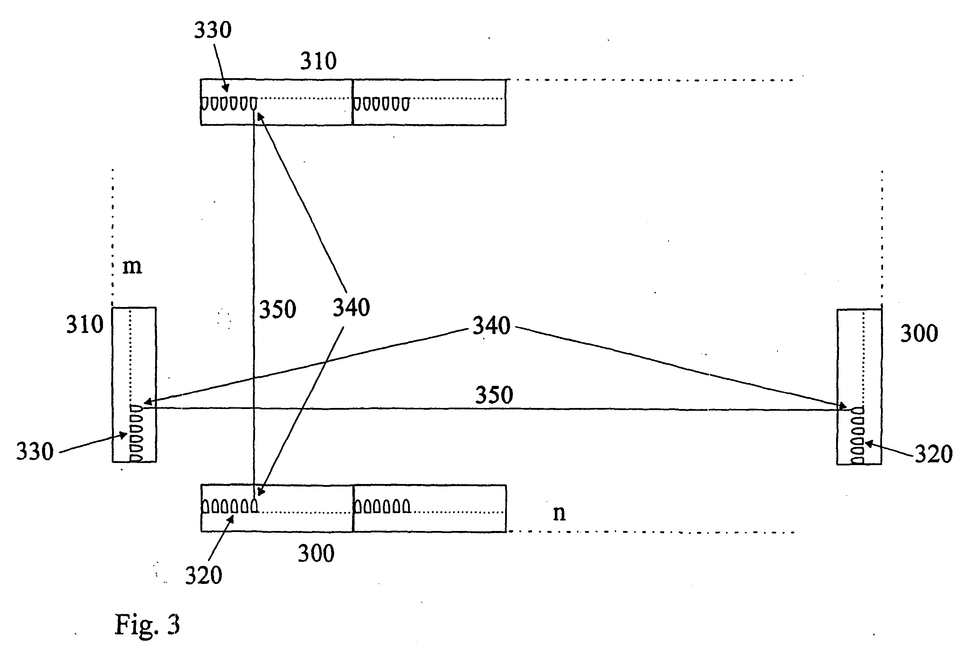

Aus WO 86/00447 ist ebenfalls ein berührungsempfindlicher Bereich bekannt, der über Lichtschranken abgetastet wird (jeder Sender bestrahlt mehr als einen Empfänger). Die paarweise angeordneten Sender und Empfänger werden über die in Fig. 3 und 4 gezeigten Schaltungen nacheinander verwendet. Ziel ist es, Einflüsse des Umgebungslichts und aufgrund von Bauteil-Toleranzen einzelner Sender oder Empfänger zu kompensieren.

EP - A - 0 772 148 geht allgemein auf die Problematik von Lichtschranken in einer optischen Erfassungseinrichtung (Lichtgitter) für große Schaufenster mit Projektor ein, schlägt dann aber die Verwendung eines Scanners an nur einer Stelle vor.

Bei dem aus US 4,247,767 bekannten Eingabegerät gibt es keine direkte paarweise Beziehung zwischen Sendern und Empfängern. Ein Lauflicht am Rand der Fläche wird nur von vier Detektoren in den Ecken beobachtet.

Aufgabe der Erfindung ist es, die Nachteile der bekannten Vorrichtungen zu vermeiden. Die in den Ansprüchen definierte Erfindung löst diese Aufgabe.

Ein Ausfiihrungsbeispiel der Erfindung wird unter Bezugnahme der beiliegenden Zeichnungen näher erläutert. Darin zeigt
- Fig. 1: einen schematischen Aufbau eines multiaktiven Schaufensters
- Fig. 2: eine Blockdarstellung einer großflächigen, interaktiven Projektion
- Fig. 3: den Aufbau der zeit- und ortsgesteuerten Lichtschranken.

Die oben genannten Nachteile bisheriger Touchscreen-Lösungen für große Flächen treten bei einer erfindungsgemäßen Ausführung des Touchscreens nicht auf. In Verbindung mit einer Rückprojektion mittels heutiger leistungsstarker LCD- oder DMD Video- und Daten-Projektoren lassen sich große Schaufenster zu multiaktiven Projektionsflächen umarbeiten (Fig.1), die folgenden Eigenschaften genügen:
1) Preiswerte Ausrüstung des Schaufensters mit einer berührungsempfindlichen Fläche.
2) vandalismussicherer Aufbau.
3) Zuverlässige Detektion eines Benutzereingriffes bei einer Fingerbreite ab 10mm (Kleinkinder) mit einer Positionsauflösung von ±1,5mm ohne jeglichen Lichtverlust der Projektion.
4) Vollkommen automatischer Tag- und Nachtbetrieb dank leistungsstarker, fernsteuerbarer Projektoren möglich.

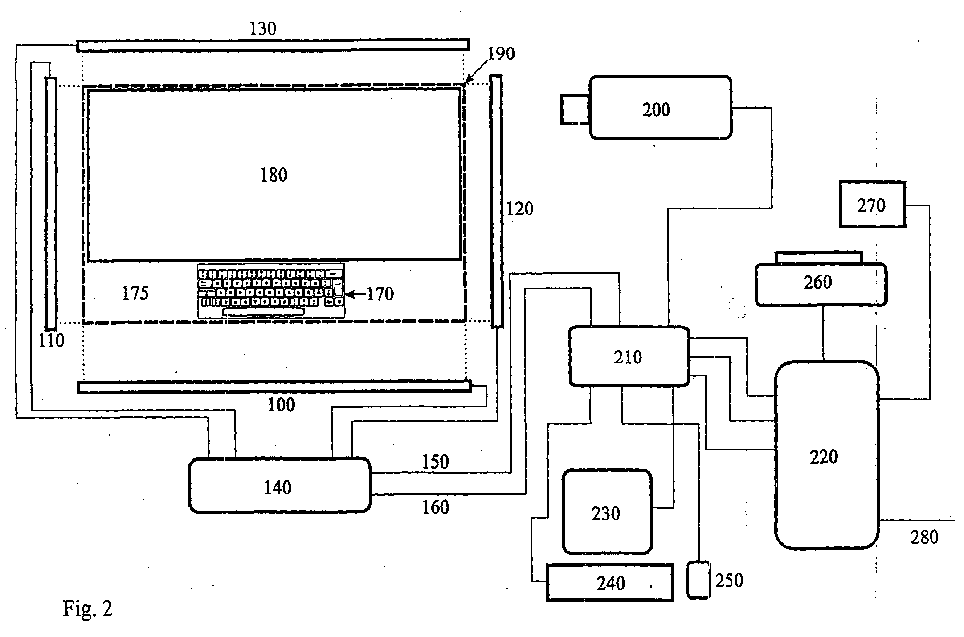

Erfindungsgemäß werden diese Anforderungen dadurch erfüllt, daß die Detektion des Benutzereingriffes durch in horizontaler und vertikaler Richtung angeordnete elektromagnetische (typischerweise im infraroten Spektralbereich) Sender und Empfänger erfolgt, welche in geeigneter Weise zeitsequentiell und ortsabhängig angesteuert werden. Diese Sender und Empfänger sind jeweils getrennt in Modulen angeordnet (Sender- und Empfängermodule Fig. 3, 300, 310), welche sich prinzipiell in beliebiger Menge aneinanderreihen lassen (Fig. 2, 100, 110, 120, 130). Diese Module werden außen um den zu definierenden berührungsempfindlichen Bereich (190) angebracht, wobei die Module in großer Entfernung zu den Grenzen des Bereiches befestigt werden können (bis zu 8m voneinander entfernt), was bautechnisch die Möglichkeit erschafft, diese zu 'verstecken'. Da die Module in stabilen Aluminium-, Stahl- oder Druckgussgehäusen eingebaut sind, ist diese Anordnung vandalismussicher. Die Sender- und Empfängermodule 300, 310 stehen sich gegenüber und 'schauen' quasi über den berührungsempfindlichen Bereich 190 hinweg (der Abstand von der Schaufensterfläche beträgt dabei ca. 0,5 bis 3cm). Jedes Modul (300, 310) hat einen eigenen Mikrokontroller, der im Modul selbst angeordnet ist. Die gesamte Anordnung stellt ein Multiprozessorsystem dar. Auch das Zentralmodul 140 hat einen Mikrokontroller mit größerer Leistungsfähigkeit gegenüber den Modulkontrollern (größere RAM-Kapazität, höhere Clockfrequenz, größerer Flash-RAM). Die Sendermodule 300 erhalten ihre Steuersignale vom Zentralmodul 140. Die Messsignale der Empfangsmodule 310 werden statistisch ausgewertet und an das Zentral modul 140 übermittelt.
Das Zentralmodul 140 stellt sich die gesamte interaktive Fläche zusammen und erkennt einen gültigen Benutzereingriff. Dieser wird z.B. in einem speziellen Protokoll (z.B. serielle Standardschnittstelle für Maus) an den PC ausgegeben. Andere Ausgabearten wie x-, y-Koordinaten (für Spiele-Konsolen) oder PS2-Maus-Emulation sind durch den angeschlossenen PC einstellbar. Das Zentralmodul erlaubt aufgrund der Mikrokontrollerschaltung die Implementierung beliebiger Maus-Protokolle oder serielle Übertragungsprotokolle. Die Daten werden an den die Präsentation steuernden Steuercomputer 220 übertragen.

Eine bevorzugte Ausführung der Erfindung wird im Folgenden beschrieben (Fig.2, Fig. 3):
Der Touchscreen besteht aus IR-Sende- und IR-Empfangsmodulen (300, 310), die zu jeweils einer horizontalen und einer vertikalen Sende- und Empfangsmodulreihe (100, 110, 120, 130) zusammengesteckt werden. Dabei muss die Anzahl der aktiven Sendemodule in horizontaler (bzw. vertikaler) Richtung n (bzw. m) mit der Anzahl der aktiven Empfangsmodule in horizontaler (vertikaler) Richtung übereinstimmen. Allerdings kann m ungleich n sein. Es lassen sich also beliebige rechteckige Bereiche 190 definieren. Im bevorzugten Beispiel sollte n, m nicht größer als 16 sein. Zum Beispiel bei einer Baulänge der Module von 16cm (16 Sender 300 bzw. Empfänger 310 sind auf einem Modul zusammengefasst, der Abstand der Sendedioden bzw. Empfangstransistoren auf je einem Modul ist 10mm) können in diesem Ausführungsbeispiel Benutzereingriffe auf einer maximale Flächen von 2,56 x 2,56m² (6,55m²) detektiert werden. Prinzipiell sind größere Flächen mit einer erfindungsgemäßen Ausführung möglich. Die Sende- und Empfangsmodulreihen (100, 110, 120, 130) müssen nicht direkt am berührungsempfindlichen Bereich 190 befestigt werden, sondern können von ihm noch einen prinzipiell beliebigen Abstand aufweisen (Fig. 2). Die jeweils 2 Sende- und Empfangsmodulreihen (welche wiederum aus jeweils n bzw. m Modulen bestehen) sind mit einem Zentralmodul 140 verbunden. In der bevorzugten Ausführung der Erfindung merkt das Zentralmodul 140 selbstständig, aus wie vielen Modulen die Einheiten in x-(horizontal) und y-(vertikal) Richtung bestehen. In dieser bevorzugten Ausführung ist vorgesehen, dass sich neben dem aktiven Bereich 190, welcher durch die Größe des projizierten Bildes vorgegeben ist, noch ein weiterer berührungsempfindlicher Bereich 170 definieren lässt, welcher als Tastatur oder/und Trackball zur Dateneingabe an den Steuercomputer (PC) 220 genutzt werden kann. Dadurch ergeben sich im gesamt-möglichen berührungsempfindlichen Bereich erlaubte (180 und 170) und nicht erlaubte (175) Zonen. Die Verbindung vom Zentralmodul 140 zum Steuercomputer (PC) 220 wird in dieser Ausführung über zwei Schnittstellen eine funktioniert als Maus 150, eine als Tastatur 160 und einen Tastatur-, Maus- und Monitorumschalter 210 hergestellt. Eine zusätzliche Maus 250 und eine zusätzliche Tastatur 240 können zur Einrichtung des Gesamtsystems direkt am Ort des Steuercomputers (PC) 220, der in einem anderen Raum stehen kann, installiert sein.

Im folgenden wird die Art der Ansteuerung der einzelnen Sende-Dioden und Empfangs-Fototransistoren (320, 330) beschrieben. Statt der Fototransistoren können natürlich auch andere optische Empfänger wie z. B. Fotodioden oder Fotoelemente eingesetzt werden. Die Ansteuerung zeichnet sich durch folgende grundsätzliche Eigenschaften aus:
1) Es wird zunächst ein gegenüberliegendes Paar 340 Sende-/Empfangsdioden einer Sende-/Empfangseinheit eingeschaltet. Das heißt, eine Sende-Diode sendet ihr (im allgemeinen) IR-Licht aus, während in diesem Zeitraum t_{D} nur die gegenüberliegende Empfangsdiode eingeschaltet ist (nur deren Signalverstärker verstärkt das ankommende Signal). Nach einer gewissen Zeit Δt_{diode} wird dieses Paar ausgeschaltet und das nächste eingeschaltet. Ist ein Umlauf (Scan) über alle Diodenpaare beendet, fängt man wieder mit dem ersten Paar an. Sinnvollerweise scannt man die horizontalen und die vertikalen Dioden gleichzeitig (so dass immer zwei Sendedioden und zwei Empfangsdioden eingeschaltet sind, eine aus der horizontalen und eine aus der vertikalen Sende-/Empangseinheit). Die Reihenfolge der einzuschaltenden Dioden ist völlig willkürlich, sollte aber der Einfachheit der Ansteuerung halber hintereinander liegen. Ein typischer Wert für Δt_{diode} liegt zur Zeit bei 200µs. Eine schnellere oder langsamere Ansteuerung bei anderen Anwendungen (z. B. Sicherheitstechnik, Überwachungsbereiche) ist möglich. Bei maximal benutzten 16 Modulen à 16 Dioden ergeben sich somit 256 Dioden pro Sende-/Empfangseinheit und eine Zeit von ca. 50ms für einen Scan (dies entspricht einer Gesamtscanfrequenz von ca. 20Hz).
2) Der paarweise Betrieb der Sende- und Empfangsdioden erspart die Verwendung von aufwendigen Optiken zur Fokussierung des abgestrahlten Lichtes. Diese wäre ansonsten notwendig, um über solche großen Distanzen ein Übersprechen zwischen den Empfängern zu verhindern. Aus dem gleichen Grund reichen auch einfache IR-Dioden mit geringem Öffnungswinkel aus, es werden keine Laserdioden benutzt (welche um ein vielfaches teurer wären).
3) Während der kurzen An-Zeit Δt_{diode} einer Sendediode 320 wird diese aber mit einem mehrfachen der nominellen Dauerleistung betrieben (strom- oder spannungsgeregelt). Die Lichtemission in der Zeit Δt_{diode} liegt also ein mehrfaches über ihrer nominellen Dauer-Lichtleistung. Da jede IR-LED die restliche Zeit eines Scans ausgeschaltet ist, bedeutet dies keine Einschränkung der Lebensdauer der Dioden. Aus diesem Grund kann der Abstand der Sende- und Empfangseinheiten zur berührungsempfindlichen Fläche groß sein (bis 8 m Gesamtabstand wurden bereits demonstriert). Da die Sende- und Empfängerreihen die Abtastung großer empfindlicher Flächen ermöglichen sollen, ist eine normale gepulste Lösung, wie sie in Fernbedienungen mit normaler Rechteckspannungsaussteuerung oder gar sinusförmiger Ansteuerung vorkommt, nicht mehr möglich. Hier muss die Diode als Bauteil mit Sperrschichtkapazität, Ladungsträgerlebensdauer und Ladungsträgerbeweglichkeit betrachtet werden. Daraus ergibt sich die Notwendigkeit, beim Einschalten eine massive Übersteuerung durch die Einschaltspannungsamplitude und durch eine Anstiegszeit, die im Bereich einiger ns liegt, zu erzeugen. Um solch ein Ansteuerverhalten zu erzielen, können verschiedene Methoden wie z.B. die Verwendung von leistungsstarken, schnellen Schalttransistoren oder entsprechender Logik mit Nachdifferenzierung und Verstärkung verwendet werden. Durch diese Übersteuerung ist bei der normalen LED keine Pulsfolge im kHz-Bereich möglich, da es zu viele Ladungsträger im pn-Übergang gibt. Eine Pulsfolge mit dieser Ansteuerung ergibt einen einzelnen Lichtblitz, der im Bereich von µs nach Abschalten der Pulsfolge abklingt. Um diese Eigenschaft zu vermeiden, muss die Senderdiode nach der Übersteuerung direkt wieder von Ladungsträgern entladen werden. Dazu gibt es verschiedene Möglichkeiten, wie z.B. den Einsatz eines zusätzlichen Entladetransistors oder einfach eines parallelen Lastwiderstandes. Das Ergebnis ist die Generierung kurzer sehr intensiver Lichtblitze, die als Folge (Burst) ausgestrahlt werden und die später im Empfänger für einen hohen Signal-Rauschabstand sorgen. Die auf den Sendermodulen vorhandenen Mikrokontroller erlauben beide Steuerungen individuell einzustellen, um eventuelle Reflexionen auf der Schaufensterscheibe oder Projektionsebene zu minimieren. In der bevorzugten Ausführung der Erfindung werden je nach Größe der interaktiven Fläche 10 -15 Impulse pro Burst abgestrahlt.
4) Die IR-LEDs 320 werden während ihrer An-Zeit nicht mit einer konstanten Leistung betrieben, sondern im sogenannten Burst-Mode. Das heißt, sie werden mit einer Frequenz f betrieben, welche deutlich über der Frequenz der Weiterschaltung der Dioden liegt f>1/Δt_{diode}. Typischerweise liegt diese Frequenz im kHz-Bereich.
5) Die Verstärkungsschaltung der Detektoren 330 in der Empfangseinheit weist eine hohe Dämpfung (geringe Verstärkung) für Frequenzen ungleich der Burst-Frequenz f auf, aber eine niedrige Dämpfung (hohe Verstärkung) bei der Burst-Frequenz f. Deshalb werden Lichteinflüsse der Umgebung (Tageslicht, 50Hz Brummfrequenz von Netzspannungslampen etc.) effektiv unterdrückt. Die Eingangsschaltung der Empfänger hat jedoch keinen normalen Filter (LC, RC) als Arbeitswiderstand, sondern verwendet nur eine Induktivität als Arbeitswiderstand. Dadurch ergeben sich zwei wesentliche Vorteile: Erstens ist eine Störung durch Gleichlicht (Tageslicht, Straßenlampen) oder Licht mit Amplitudenmodulation in kleinen Frequenzbereichen (50Hz, 100Hz) nicht mehr möglich. Die Spule wirkt in diesem Fall wie ein Kurzschluss. Zweitens wird der Arbeitspunkt der Fototransistoren selbst bei starker Sohneneinstrahlung nicht so weit verschoben, dass eine Nutzsignaldetektion nicht möglich ist. Zur Burstanalyse wird kein Filter oder PLL-System verwendet. Nach der Einschwingzeit wird ein Integrator eingeschaltet, der eine stufenlose Mittelwertbildung erlaubt. Die Integrationszeit hat ein Verhältnis von 1:3 zur Gesamtzeit eines Bursts. Über einen Komperator erhält man damit eine nahezu 100%-ige Nachweiswahrscheinlichkeit der Unterbrechungen der Lichtschranke bei großen Abständen zwischen Sender und Empfänger. Die Empfängerbausteine lassen sich mit Hilfe der Mikrokontroller in ihrer Empfindlichkeit durch den Beginn der Integration und durch die Dauer der Integration bezogen auf die Burstzeit beeinflussen. Dies erlaubt eine flexible und automatische Anpassung an die Gesamtentfemung der Sender- und Empfängerreihen.
6) Zur weiteren Steigerung der zuverlässigen Detektion auch schmalerer Unterbrechungen und des Auflösungsvermögens (Ortsauflösung der Detektion der Unterbrechung) wird nicht nur die dem aktuell operierenden Empfänger genau gegenüberliegende Diode (Paar 340) eingeschaltet, sondern auch deren unmittelbare Nachbarn. Die Sender-An-Zeit verringert sich dann auf 1/3 der Empfänger-An-Zeit. Andere zeitliche Folgen/Ortskombinationen sind ebenfalls möglich. Für eine Berührung der interaktiven Fläche wird meistens nur ein Finger (Zeigefinger) benutzt. Der Zeigefinger von Kleinkindern hat einen mittleren Durchmesser von 10mm, der von Erwachsenen ca. 18mm. Der Abstand der Lichtschranken beträgt in x- und in y-Richtung 10mm. Im Normalfall unterbricht ein Erwachsener immer mehr als eine Lichtschranke und kann daher zu 100% nachgewiesen werden. Ein Kleinkind kann im schlimmsten Fall einen Finger zwischen zwei Lichtschranken halten, so dass die Restlichtstrahlung wie bei einer einseitigen Blendenabschattung immer noch vom Empfänger gesehen wird.
   Um eine höhere Nachweiswahrscheinlichkeit bei kleineren Objekten, die den Strahlengang unterbrechen können, zu erzielen, werden folgende Steuerungen der Empfänger und Sender ermöglicht. Ausgehend von Sender-LEDs mit 5mm Ø, 10mm Abstand zur Nachbar-LED und einem Öffnungswinkel von ±8° wurden folgende Ergebnisse für die statistische Auswertung ermittelt, um eine Unterbrechung mit 100% Sicherheit an beliebiger Position innerhalb des aktiven Bereichs auszulösen (Auflösung des Ortes < ± 1,5mm).
   a) Eingeschaltet werden während der Integrationszeit:
      Empfänger n und Sender n fortlaufend: Die Fingerdicke muss mindestens 15mm im gesamten interaktiven Bereich sein, um sie zu 100% mit einer Auflösung von ±1,5mm mit Zusatzauswertung im Zentralmodul 140 (Zusatzauswertung wird weiter unten beschrieben) nachzuweisen.
   b) Eingeschaltet werden während der Integrationszeit des Empfängers n nacheinander die Sender n-1, n und n+1. Die Empfängersignale werden in Abhängigkeit davon, welcher Sender gerade aktiv ist, ausgewertet.
   c) Eingeschaltet werden während der Integrationszeit des Empfängers n nacheinander die Sender n-3, n-1, n, n+1, n+3. Die Empfängersignale werden in Abhängigkeit davon, welcher Sender gerade aktiv ist, ausgewertet.

   Beliebige weitere Kombinationen der Senderansteuerung relativ zum Empfänger sind denkbar. Die Burstanschaltdauer wird dabei entsprechend verlängert. Da der Gesamtabstand der Sender- und Empfängerreihen zueinander meist größer ist als das projezierte Bild und damit der gewünschte interaktive Bereich, ist in den meisten Fällen die Ansteuerung nach Methode b) die sinnvollste. Durch die Mikrokontrollertechnik lässt sich bei Bedarf aber auch Version a) oder c) einstellen. Andere Einstellungen der Gesamtsteuerung sind möglich. Alle Steuerungen außer 1) erlauben die sichere Detektion von Fingerdicken > 10 mm.
7) Befinden sich die Sende- und Empfangseinheiten (100, 110, 120, 130) in einem großen Abstand zueinander und direkt vor einer stark reflektierenden Fläche (Schaufenster), so kann man zusätzlich zur elektronischen Regelung die Sende- und Empfangsmodule (300, 310) so in ein Gehäuse einbauen, dass eine Blende nur in der Fläche der Projektion entsteht, die verhindert, dass das abgestrahlte Licht der Sendedioden die reflektierende Fläche erreicht, und somit eine Strahlunterbrechung und damit Detektion verhindert. Diese Blende kann auch als Einzelteil montiert werden.
8) Zusätzlich zur Kombination der relativen Senderumschaltung bezogen auf die Integration eines Empfängers, die die Nachweiswahrscheinlichkeit kleinerer Objekte wesentlich erhöht, wird im Zentralmodul 140 eine grundsätzliche Statistik über Unterbrechungen der Lichtschranken örtlich und zeitlich geführt. Damit ergibt sich eine höhere Auflösung der Abtastung bis auf ca. 1mm. Eine Mittelwertbildung der Unterbrechungen über 3 benachbarte Lichtschranken und zusätzlich eine zeitliche Analyse über 3 Abtastungen in Folge erlauben die sichere Detektion des Benutzers und des Eingriffsortes. Zusätzlich werden kurze Störungen wie z.B. Insekten ausgeschlossen. Längere Störungen (lichtundurchlässiger Gegenstand auf einem Lichtschrankenbereich) können nach der Erkennungszeit (20 - 40s) ebenfalls ausgeblendet werden. Zusätzlich wird ein Ereignis nur als wahr interpretiert, wenn x- und y-Lichtschranken für eine Mindestzeit unterbrochen sind.
9) Das Zentralmodul 140 emuliert eine serielle Standardmaus gegenüber dem Steuercomputer (PC) 220. Damit ist dieses System als Maus sofort für alle Betriebssysteme (z.B. Windows 95/98/2000 oder Linux) und Computertypen (z.B. PCs, Workstations) einsetzbar. Verlässt der Benutzer den interaktiven Bereich an einer Position x_{1'}, y₁, so wird an dieser Stelle vom Zentralmodul an den Steuercomputer das Drücken der linken Maustaste gemeldet. Da das Zentralmodul mit einem Mikrokontroller aufgebaut ist, ist in der Firmware zusätzlich die Emulation der direkten Ausgabe der x- und y-Koordinaten für Videospiele oder eine PS2-Maus abrufbar. Andere Schnittstellenprotokolle sind durch den Steuercomputer jederzeit auf das Zentralmodul ladbar. Zusätzlich zur Mausemulation kann das Zentralmodul 140 bei Bedarf eine Standard-IBM-Tastatur (150, 160) emulieren.

Ein typischer Benutzereingriffund seine Detektion sehen dann so aus:
Der Benutzer nähert sich mit seinem Finger der berührungsempfindlichen Fläche (Schaufenster), um einen über den Projektor dargestellten Bildbereich zu berühren. Ab einem bestimmten Umlauf des Scans aller Sende- und Empfangsdioden werden mehrere Empfangsdioden in waagerechter und senkrechter Richtung eine Lichtunterbrechung feststellen. Diese Information wird im Zentralmodul 140 zu einer Position der Benutzerunterbrechung umgerechnet und kann dem Steuercomputer z.B. als Position des Mauszeigers übermittelt werden. Beim nächsten Scan-Umlauf befindet sich der Schwerpunkt der Unterbrechung evtl. an einer anderen Position (da ein Scan nur 1/20 Sekunde dauert, wird sich die Position der Unterbrechung nur langsam verändern). Wird ab einem bestimmten Scan keine Unterbrechung mehr festgestellt, so hat der Benutzer seinen Finger aus der sensitiven Zone entfernt. Diese Aktion kann dem Steuercomputer vom Zentralmodul als Mausklick übermittelt werden. Daraufhin kann der Steuercomputer einen entsprechend dem Mausklick neuen Bildinhalt über den Projektor auf der berührungsempfindlichen Fläche darstellen.

Erfindungsgemäß sind auch Ausführungen, bei denen die Anzahl der Sende- und Empfangsdioden in den Sende- und Empfangseinheiten nicht gleich ist. Bei großen Abständen von der Sendeeinheit zur berührungsempfindlichen Fläche können so Sendedioden eingespart werden. Die Auflösung wird dann durch den Abstand der Empfangsdioden festgelegt.

Eine weitere erfindungsgemäße Ausführung bestünde darin, dass die Sende- und Empfangsdioden nicht in verschiedenen Modulen und Sende- und Empfangseinheiten angeordnet sind, sondern abwechselnd oder parallel auf einer Seite. Auf der gegenüberliegenden Seite befindet sich dann entweder eine spiegelnde oder eine absorbierende Einheit. Die Detektion im ersten Fall ist ganz analog zur oben beschriebenen. Zur Detektion im zweiten Fall wird dann das vom Benutzereingriff (typischerweise ein Finger) rückgestreute Licht verwendet (keine Lichtschrankenunterbrechung wird detektiert, sondern die Lichtschrankenschließung). Die Absorptionsvorrichtung im gegenüberliegenden Bereich verhindert ein unbeabsichtigtes Schließen der Lichtschranken. Die Ansteuerung benachbarter Sende- und Empfangsdioden folgt ansonsten dem in den Punkten 1-8 beschriebenen Weg.

Eine bevorzugte Ausführung des Einbaus der berührungsempfindlichen Fläche wäre die in Fig. 1 dargestellte. Dabei beleuchtet ein Daten- und Videoprojektor von hinten eine hinter einem Schaufenster befindliche Rückprojektionsfläche (normale Mattscheibe, holografische Rückprojektionsscheibe, z.B. HoloPro^{©} von Pronova zur besseren Unterdrückung des Umgebungslichtes). Auf dem Schaufenster wird die berührungsempfindliche Fläche aufgebaut. Die Halterungen der Sende- und Empfangseinheiten lassen sich im Rahmen der Schaufensterscheibe 'verstecken'. Für eine typische Projektionsfläche von 1,6m², bei einer Transmission der Mattscheibe von 50%, einem Lichtverstärkungsfaktor der Mattscheibe in Vorwärtsrichtung von 2, einer Umgebungsleuchtdichte auf dem Schaufenster von 2000 Lux (schattiger Außenbereich) und einem Reflektionsgrad für dieses Licht von ca. 35% benötigt man einen Projektor mit einer Lichtleistung von ca. 2300 ANSI-Lumen, um auf der Mattscheibe doppelt so viel Licht, wie das Umgebungslicht zu erzielen. Bei Verwendung einer HoloPro^{™}-Scheibe ist dieses Verhältnis noch günstiger. Ein berührungsempfindliches Schaufenster lässt sich also überall im Außenbereich zur Werbung einsetzen, sei es in Fußgängerzonen, auf Messen, in Autohäusern etc. Weitere Anwendungen der berührungsempfindlichen Fläche sind große geschlossene Rückprojektionsboxen (Multiaktivboxen) oder kleinere Infoterminals in Bahnhöfen oder Flughäfen.

### Bezugszeichenliste

Fig. 1
   - 1: Glasscheibe des Schaufensters
   - 2: Projektionsfläche
   - 3: Leiste mit Empfängermodulen
   - 4: Leiste mit Empfängermodulen
   - 5: Leiste mit Sendermodulen
   - 6: Leiste mit Sendermodulen
   - 7: Video-Datenprojektor
   - 8: Dekoration
Fig. 2
   - 100: Leiste mit Sendermodulen
   - 110: Leiste mit Empfängermodulen
   - 120: Leiste mit Sendermodulen
   - 130: Leiste mit Empfängermodulen
   - 140: Zentralmodul
   - 150: Mausausgang
   - 160: Tastaturausgang
   - 170: Folie mit Tastaturabbildung
   - 175: nicht benutzter Bereich
   - 180: Projektionsfläche (Bildfläche)
   - 190: berührungsempfindlicher Bereich
   - 200: Video-Datenprojektor
   - 210: Maus-Tastatur-Monitorumschalter
   - 220: Computer
   - 230: Monitor
   - 240: Tastatur
   - 250: Maus
   - 260: Drucker
   - 270: Kartenleser
   - 280: LAN-Anschluss
Fig. 3
   - 300: Sendermodul
   - 310: Empfängermodul
   - 320: Senderdioden
   - 330: Empfänger-Fototransistoren oder Dioden
   - 340: Sender-Empfängerpaar
   - 350: IR-Lichtstrahl

## Patentansprüche

1. Verfahren zur Detektion eines Benutzereingriffes in einen großen, berührungsempfindlichen Bereich (190) mit Licht ausstrahlenden Sendern und dieses Licht detektierenden Empfängern in senkrechten und waagerechten Sende- und Empfangseinheiten (300, 310),
wobei jeweils ein Sender (300) und ein Empfänger (310) optisch in einer direkten paarweisen Beziehung einander **zugeordnet sind,**
wobei die Detektion eines Benutzereingriffes durch fortlaufend wiederholtes zeit- und ortssequentielles An- und Ausschalten einzelner Sender und Empfänger erfolgt,
wobei alle elektrischen Signale der Empfänger in einem Zentralmodul (140) zusammengeführt sind
sowie die Sender von diesem Zentralmodul (140) aus angesteuert werden,
**dadurch gekennzeichnet, dass**
zur Auswertung und Auflösungserhöhung bei der Auswertung des Signales des n-ten Empfängers auch die Signale von Sendern herangezogen werden, die benachbart sind zu dem direkten Sender (300),
d.h. dass in einer Auswerteperiode des n-ten Empfängers (310) neben den Signalen des dem n-ten Empfängers zugeordneten n-ten Senders auch Signale von zum n-ten Sender benachbarten Sendern ausgesendet, registriert und ihrem jeweiligen Sender auswertungsmäßig zugeordnet werden,
derart, dass alle aktiven Sender (300) während einer Auswerteperiode eines Empfängers eine Vielzahl von Impulsen aussenden, deren integrative, quantitative Auswertung eine Relativangabe über die Lage der Unterbrechung bezüglich der direkten Sender ist.

2. Verfahren nach Anspruch 1, **dadurch gekennzeichnet, dass**
die Sendedioden während ihrer kurzen An-Zeit mit höherer Leistung als ihrer nominellen Dauerleistung betrieben werden.

3. Verfahren nach Ansprüchen 1 bis 2, **dadurch gekennzeichnet, dass**
die Wellenlänge des verwendeten Lichts im infraroten Spektralbereich liegt und die Sender und Empfänger dieses aussendende bzw. empfangende Halbleiterbauelemente sind.

4. Verfahren nach Ansprüchen 1 bis 3, **dadurch gekennzeichnet, dass**
die Sender während ihrer An-Zeit mit einem Burst-Signal betrieben werden, das heißt, dass das sie steuernde elektrische Wechsel-Signal eine höhere Frequenz f aufweist, als die Wechsel-Frequenz der nacheinander angesteuerten Dioden der Sendeeinheiten, wobei zur schnellen Übersteuerung Maßnahmen wie Erhöhung der Einschaltspannungsamplitude / Spannungsanstiegszeit und zwangsweise Entladung der Senderdioden von Ladungsträgern nach dem Übersteuerungsimpuls benutzt werden.

5. Verfahren nach Ansprüchen 1 bis 4, **dadurch gekennzeichnet, dass**
die Verstärkerschaltung der Empfänger eine große Verstärkung für die Burst-Frequenz f aufweist und ansonsten eine hohe Dämpfung ermöglicht durch einen induktiven Arbeitswiderstand gefolgt von einem Integrator.

6. Verfahren nach Ansprüchen 1 bis 5, **dadurch gekennzeichnet, dass**
vor den Sendern und Empfängern das Licht eine optische Blende durchläuft.

7. Verfahren nach Ansprüchen 1 bis 6, **dadurch gekennzeichnet, dass**
die optische paarweise Beziehung der Sender Empfänger durch gegeneinander positionierte Sender und Empfänger in einander gegenüberliegenden Sende- und Empfangseinheiten vermittelt wird.

8. Verfahren nach Ansprüchen 1 bis 6, **dadurch gekennzeichnet, dass**
die optische paarweise Beziehung der Sender und Empfänger durch nebeneinander positionierte Sender und Empfänger in einer gemischten Sende- und Empfangseinheit und einer gegenüber positionierten Spiegelfläche vermittelt wird.

9. Verfahren nach Ansprüchen 1 bis 6, **dadurch gekennzeichnet, dass**
die optische paarweise Beziehung der Sender und Empfänger durch nebeneinander positionierte Sender und Empfänger in einer gemischten Sende- und Empfangseinheit und einer gegenüber positionierten absorbierenden Fläche vermittelt wird.

10. Verfahren nach Ansprüchen 1 bis 9, **dadurch gekennzeichnet, dass**
der Mikroprozessor des Zentralmoduls aus den digitalen Empfangsmodulsignalen über eine statistische Auswertemethode den Ort des Benutzereingriffes berechnet.

11. Verfahren nach Ansprüchen 1 bis 10 **dadurch gekennzeichnet, dass**
das Zentralmodul jede beliebige Schnittstelle gegenüber einem angeschlossenen Computer simulieren kann.

## Claims

1. A procedure for detecting a user intervention in a large, touch-sensitive area (190) with light-emitting transmitters, and receivers which detect this light in vertical and horizontal transmitter and receiver units (300, 310),
whereby in each case one transmitter (300) and one receiver (310) are visually arranged in a direct in a paired relation to each other
whereby the detection of a user intervention is achieved by the continuously repeated time and location-sequence switching on and off of individual transmitters and receivers
whereby all electric signals from the receivers are combined in a central module (140)
and the transmitters are triggered from this central module (140), **characterized in that**
for evaluation purposes, and in order to increase the resolution when evaluating the signal of the nth receiver, the signals from transmitters are also included which are adjacent to the direct transmitter (300)
i.e. in one evaluation period of the nth receiver (310), alongside the nth transmitter, signals from transmitter which are adjacent to the nth transmitter are also transmitted, registered and assigned to their respective transmitter for evaluation purposes
in such a manner, that all active transmitters (300) transmit a plurality of pulses during an evaluation period of a receiver, the integrative, quantitative evaluation of which is a relative value regarding the position of the interruption in relation to the direct transmitter.

2. A procedure according to claim 1, **characterized in that** the transmitter diodes are operated during their brief on-time at a higher power than their nominal continuous power.

3. A procedure according claims 1 to 2, **characterized in that**
the wavelength of the light used lies in the infrared spectral range, and the transmitter and receiver of this light are transmitting or receiving semiconducting components.

4. A procedure according to claims 1 to 3, **characterized in that**
the transmitters are operated during their on-time with a burst signal, i.e. the electric alternating signal which controls them comprises a higher frequency f than the alternating frequency of the diodes of the transmitter units which are triggered in series, whereby in order to achieve more rapid overmodulation, measures such as increasing the ON voltage amplitude/voltage increase time and compulsorily the discharge of the transmitter diodes of the charge carriers are used following the overmodulation pulse.

5. A procedure according to claims 1 to 4, **characterized in that**
the amplifier circuit of the receivers comprises a high amplification for the burst frequency f, and otherwise enables high damping due to an inductive working resistance, followed by an integrator.

6. A procedure according to claims 1 to 5, **characterized in that**
the light passes through an optical aperture in front of the transmitters and receivers.

7. A procedure according to claims 1 to 6, **characterized in that**
the optical paired relationship between the transmitters and receiver is achieved by transmitters and receivers which are positioned opposite to each other in transmitter and receiver units which are positioned opposite to each other.

8. A procedure according to claims 1 to 6, **characterized in that**
the optical paired relationship between the transmitters and receivers is achieved by transmitters and receivers which are positioned opposite to each other in a mixed transmitter and receiver unit and a mirror surface which is positioned opposite.

9. A procedure according to claims 1 to 6, **characterized in that**
the optical paired relationship between the transmitters and receivers is achieved by transmitters and receivers which are positioned adjacent to each other in a mixed transmitter and receiver unit and an absorbing surface which is positioned opposite.

10. A procedure according to claims 1 to 9, **characterized in that**
the microprocessor of the central module calculates the location of the user intervention based on the digital receiver module signals and using a statistical evaluation method.

11. A procedure according to claims 1 to 10, **characterized in that**
The central module can simulate any interface vis-à-vis a connected computer.

## Revendications

1. Procédé de détection d'une intervention d'utilisateur dans une grande zone sensible au contact (190), avec des émetteurs rayonnant de la lumière, et des récepteurs détectant cette lumière, dans des unités émettrices et réceptrices (300, 310) verticales et horizontales,
un émetteur (300) et un récepteur (310) étant respectivement affectés l'un à l'autre optiquement dans une relation directe par paire,
la détection d'une intervention d'utilisateur étant effectuée par la connexion et la déconnexion, répétée en permanence et séquentielle au plan temporel et local, de différents émetteurs et récepteurs,
tous les signaux électriques des récepteurs étant réunis dans un module central (140),
et les émetteurs étant pilotés à partir de ce module central (140),
**caractérisé en ce que**,
pour l'analyse et l'augmentation de la résolution lors de l'analyse du signal du nième récepteur, il est également fait appel aux signaux d'émetteurs qui sont voisins de l'émetteur (300) direct,
ce qui signifie que, dans une période d'analyse du nième récepteur (310), outre les signaux du nième émetteur affecté au nième récepteur, des signaux d'émetteurs voisins du nième émetteur sont également émis, enregistrés et affectés selon l'analyse à leur émetteur respectif,
de telle sorte que tous les émetteurs (300) actifs émettent, pendant une période d'analyse d'un récepteur, une multiplicité d'impulsions dont l'analyse par intégration, quantitative, est une indication relative sur la situation de l'interruption concernant les émetteurs directs.

2. Procédé selon la revendication 1, **caractérisé en ce que**
les diodes émettrices sont, pendant leur court temps de connexion, mises en oeuvre avec une puissance plus élevée que leur puissance permanente nominale.

3. Procédé selon les revendications 1 à 2, **caractérisé en ce que**
la longueur d'onde de la lumière utilisée se situe dans la plage spectrale infrarouge, et **en ce que** les émetteurs et récepteurs sont des composants à semi-conducteurs émettant et recevant celle-ci.

4. Procédé selon les revendications 1 à 3, **caractérisé en ce que**,
pendant leur temps de connexion, les émetteurs sont mis en oeuvre avec un signal de salve, ce qui signifie que le signal alternatif électrique qui les commande présente une fréquence f plus élevée que la fréquence alternative des diodes, pilotées les unes après les autres, des unités émettrices, des dispositions pour la surmodulation rapide, telles que l'augmentation de l'amplitude de tension de mise en circuit / du temps de montée de tension et forcément la décharge des diodes d'émetteur de porteurs de charge, étant utilisées après l'impulsion de surmodulation.

5. Procédé selon les revendications 1 à 4, **caractérisé en ce que**
le circuit d'amplificateur des récepteurs présente une grande amplification pour la fréquence de salve f, et permet pour le reste un amortissement élevé par une résistance de travail inductive suivie d'un intégrateur.

6. Procédé selon les revendications 1 à 5, **caractérisé en ce que**,
avant les émetteurs et les récepteurs, la lumière traverse un diaphragme optique.

7. Procédé selon les revendications 1 à 6, **caractérisé en ce que**
la relation par paire optique des émetteurs récepteurs est fournie par des émetteurs et récepteurs positionnés les uns en face des autres dans des unités d'émission et de réception se faisant mutuellement face.

8. Procédé selon les revendications 1 à 6, **caractérisé en ce que**
la relation par paire optique des émetteurs récepteurs est fournie par des émetteurs et récepteurs positionnés les uns à côté autres dans une unité mixte d'émission et de réception et dans une surface de miroir positionnée en face.

9. Procédé selon les revendications 1 à 6, **caractérisé en ce que**
la relation par paire optique des émetteurs et récepteurs est fournie par des émetteurs et récepteurs positionnés les uns à côté autres dans une unité mixte d'émission et de réception et dans une surface absorbante positionnée en face.

10. Procédé selon les revendications 1 à 9, **caractérisé en ce que**
le microprocesseur du module central calcule, à partir des signaux numériques de module de réception, par le biais d'une méthode d'analyse statistique, le lieu de l'intervention d'utilisateur.

11. Procédé selon les revendications 1 à 10, **caractérisé en ce que**
le module central peut simuler n'importe quelle interface vis-à-vis d'un ordinateur connecté.
